# EUROPEAN PATENT SPECIFICATION

(11) **EP 3 615 896 B1**
(45) Date of publication and mention of the grant of the patent: **15.03.2023**
(21) Application number: 18735722.3
(22) Date of filing: 24.04.2018
(51) Int. Cl.: G01F 13/00, F04B 9/04, F04C 2/107, F04C 11/00, F04B 15/02, F04C 13/00, G01F 15/00, F04C 15/00

(54) **DOSING DEVICE AND DOSING SYSTEM FOR POWDERY, LIQUID, PASTY OR CREAMY PRODUCTS, AND DISPENSING MACHINE COMPRISING SUCH DOSING DEVICES OR SYSTEMS**
DOSIERGERÄT UND DOSIERSYSTEM FÜR PULVERFÖRMIGE, FLÜSSIGE, TEIGFÖRMIGE ODER CREMIGE PRODUKTE, UND DOSIERMASCHINE MIT DERARTIGEN DOSIERGERÄTEN ODER -SYSTEMEN
DISPOSITIF DE DOSAGE ET SYSTÈME DE DOSAGE POUR PRODUITS PULVÉRULENTS, LIQUIDES, PÂTEUX OU CRÉMEUX, ET MACHINE DE DISTRIBUTION COMPRENANT DE TELS DISPOSITIFS OU SYSTÈMES

(30) Priority: 28.04.2017 IT 201700045807
(43) Date of publication of application: 04.03.2020
(73) Proprietor: Hero Europe S.R.L., 12040 Salmour (CN) (IT)
(72) Inventor: SACCHET, Alessandro, 12040 Salmour (CN) (IT)
(74) Representative: Garavelli, Paolo
(86) International application number: PCT/IT2018/000057
(87) International publication number: WO 2018/198147

(56) References cited:
- EP-A1- 1 582 467
- CN-U- 203 009 201
- CN-Y- 2 178 285
- US-A- 3 739 958
- US-A- 5 755 561

## Description

The present invention refers to a dosing device for powdery, liquid, pasty or creamy products, to a dosing system comprising at least one of such devices and to a dispensing machine comprising a plurality of such devices or systems.

In particular, the invention refers to a device for dosing and delivering products in powder or with high viscosity such as, for example, glues, putties, grease, paints, etc. which allows high and constant dosing accuracies, also with a delivery of minimum volumes, to a dosing system comprising at least one of such devices, and to a dispensing machine comprising a plurality of such devices or systems whose actuation is motored by with servomotors served by electronic controls capable of changing some parameters (volume, dosing time, dosing speed).

Dosing devices and systems are known, in particular of the volumetric type, which are actuated by control motors integrated in the dosing device itself, which allow high and constant dosing accuracies.

These dosing devices and systems, however, are not satisfactory and have the problem that such dosing devices are relatively cumbersome, since they require the presence of actuating and controlling devices specific for opening/closing the delivery duct and for controlling the delivery, composed for example of valves.

Another problem of known dosing devices and systems is that, though allowing high and constant dosing accuracies, they do not allow controlling with a single device both the dosage of normal product volumes and the reduced dosage to manage a reduced delivery, for example for finishing operations.

Documents CN-U-203 009 201, CN-Y-2 178 285, US-A-5 755 561, EP-A1-1 582 467 and US-A-3 739 958 disclose pumping, dosing devices or valves according to the preamble of Claim 1.

Object of the present invention is solving the above prior art problems by providing a device and a dosing system, and a dispensing machine comprising a plurality of such devices or systems, which allow a high dosing accuracy of a powdery, liquid, pasty or creamy product, allowing with a single device having reduced sizes to obtain both an accurate reduced delivery and a delivery of a greater amount of product.

Another object of the present invention is providing a dosing device, a dosing system and a dispensing machine which have small overall sizes, and at the same time are more reliable and allow a greater flexibility of use with respect to what is proposed by the prior art.

The above and other objects and advantages of the invention, as will appear from the following description, are obtained with a dosing device, a dosing system and a dosing machine as claimed in the respective independent claims. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:

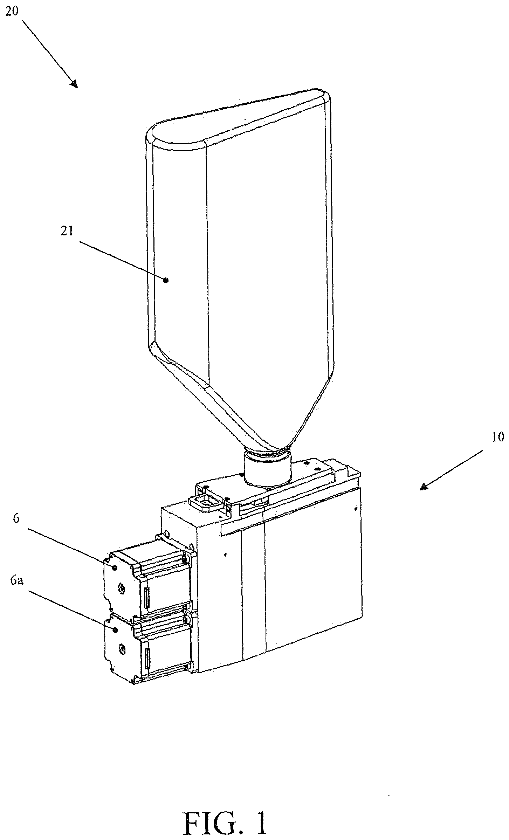

- Figure 1 shows a perspective view of an embodiment of the dosing system according to the present invention;

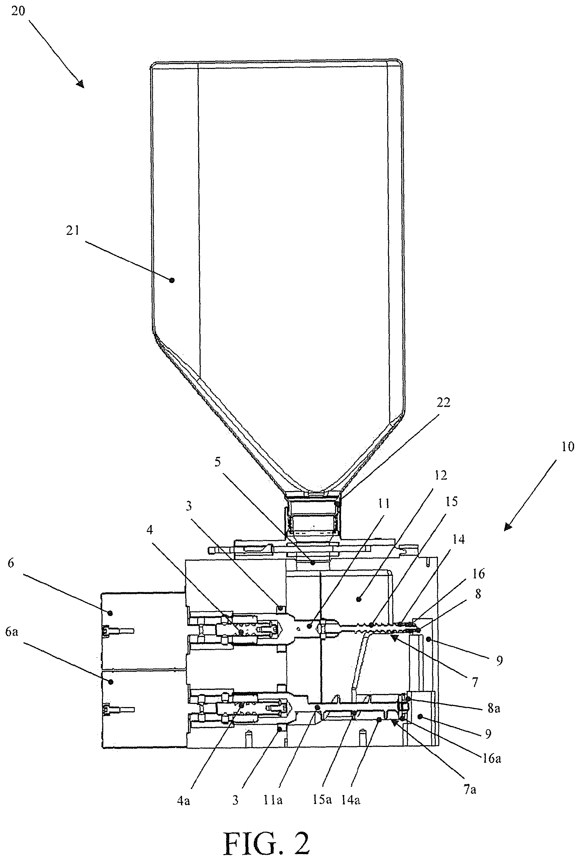

- Figure 2 shows a side sectional view of an embodiment of the dosing system according to the present invention;
- Figure 3 shows a side sectional view of an embodiment of the dosing device according to the present invention in a first configuration;
- Figure 4 shows a side sectional view of an embodiment of the dosing device according to the present invention in a second configuration;
- Figure 5 shows a side sectional view of an embodiment of the dosing device according to the present invention in a third configuration; and
- Figure 6 shows a side sectional view of an embodiment of the dosing device according to the present invention in a fourth configuration.

With reference to the Figures, the dosing device 10 according to the present invention, in particular for delivering and dosing powdery, liquid, pasty or creamy products, comprises a first duct 5 for entering the product to be dosed, a second duct 9 for exiting such dosed product, an internal recess 12 connected to the first duct 5 for entering the product to be dosed and at least one pumping element 7, 7a, for dosing such product, fluid connected to the internal recess 12 and to the second duct 9 for exiting such dosed product.

The dosing device 10 comprises a shaft 11, 11a connected to the pumping element 7, 7a and motor means 6, 6a connected to the shaft 11, 11a through a linear actuator 4, 4a adapted to transform the rotary motion of the motor means 6, 6a into a linear movement of the shaft 11, 11a which is performed until the shaft 11, 11a reaches an abutment obtained in the second outlet duct 9; after the shaft 11, 11a has reached the abutment, the movement of the shaft 11, 11a becomes rotary, following the rotary motion of the motor means 6, 6a, and actuates the pumping element 7 dosing the delivery of the product from the second outlet duct 9.

Preferably, the pumping element 7 is a cochlea or a volumetric pump of a known type and comprises a pumping chamber 14 inside which a rotor 15 is assembled, connected to the shaft 11, 11a and to a shutter 16 adapted to close an outlet nozzle 8 of the product which communicates the internal recess 12 with the second duct 9; the shaft 11, 11a is associated, in a known way, with the walls of the internal recess 12 through radial and longitudinal sealing elements 3 of a known type, adapted to keep the internal recess 12 water-proof.

For example the pumping element 7, 7a is a cochlea or a volumetric pump of a known type.

Preferably, the linear actuator 4, 4a is composed of a worm screw with reversible pitch with related scroll connected through the shaft 11, 11a to the motor means 6, 6a, composed for example of an electric motor, preferably a stepped motor.

Preferably, the dosing device 10 of the invention comprises a second pumping element 7a fluid connected to the internal recess 12 and to the second outlet duct 9 of the dosed product.

In a preferred way, the dosing device 10 of the invention comprises a second shaft 11a connected to the second pumping element 7a and second motor means 6a connected to the second shaft 11a through a second linear actuator 4a, adapted to transform the rotary motion of the second motor means 6a into a linear movement of the second shaft 11a, which is performed until the second shaft 11a reaches an abutment obtained in the second outlet duct 9; after the second shaft 11a has reached the abutment, the movement of the second shaft 11a becomes rotary, following the rotary motion of the second motor means 6a, and actuates the second pumping element 7a generating a delivery of the product from the second outlet duct 9.

Similarly to the pumping element 7, also the second pumping element 7a, in a preferred way, is a cochlea or a volumetric pump of a known type comprising a pumping chamber 14a inside which the second shaft 11a is assembled, connected to a rotor 15a and to a shutter 16a adapted to close a second outlet nozzle 8a of the product which communicates the internal recess 12 with the second duct 9.

Also the second pumping element 7a is for example a cochlea or a volumetric pump of a known type, and the second linear actuator 4a is composed of a worm screw with reversible pitch with related scroll connected through the second shaft 11a to the second motor means 6a, composed for example of an electric motor, preferably a stepped motor.

Preferably, the second pumping element 7a has a flow-rate greater than that of the pumping element 7, in order to allow an adjustment of the flow-rate by activating both or only one of the two pumping elements 7, 7a; in particular, the second pumping element 7a has a pumping chamber 14a whose volume is greater than that of the pumping chamber 14 of the pumping element 7, in order to allow an adjustment of the flow-rate by opening only one of the two outlet nozzles 8, 8a or opening them both simultaneously, thereby dosing with more accuracy the delivery of the product from the second outlet duct 9.

The dosing system 20 for delivering and dosing powdery, liquid, pasty or creamy products according to the present invention comprises a tank 21 adapted to contain the product to be dosed, and the dosing device 10 connected to the tank 21 through the first inlet duct 5, inside which a system can be inserted for controlling the level, in order to interlock the use of the 'dry' system and to communicate to a user when the product inside the tank 21 is finished and it is necessary to replace the tank.

The tank 21 can further be equipped with a RFID label to control the authenticity of the product contained therein; the RFID label is further useful to automatize the SW operations which allow managing the stocks and the traceability of the used product batches.

The dosing system 20 further comprises a connecting plug 22 of the tank 21 to the device 10 which is replaced by the closing plug of the tank 21 to connect it to the system 20, and is equipped with a valve, preferably a 'guillotine' valve which performs the function of avoiding product leakages and enabling the fastening and unfastening operations of the tank 21; alternatively, a seal with welded film can be used.

The dispensing machine for delivering and dosing powdery, liquid, pasty or creamy products according to the present invention comprises a plurality of previously described devices 10 or systems 20, and electronic controls for driving the motor means 6, 6a capable of changing the dosing parameters, for example volume of delivered product, dosing time or dosing speed, activating both or only one of the two pumping elements 7, 7a, in particular driving the opening/closing of the outlet nozzles 8, 8a, by the shutters 16, 16a connected to the motor means 6, 6a through the shafts 11, 11a.

The operation of the dosing device 10 and of the dosing system 20 for powdery, liquid, pasty or creamy products according to the present invention will now be described.

The dosing system 20 for powdery, liquid, pasty or creamy products comprises the tank 21 adapted to contain the product to be dosed which can be open or closed.

Dosing of the product delivered from the second outlet duct 9 of the device 10 of the invention is regulated by suitably driving, through the electronic controls, the motor means 6, 6a to change the dosing parameters, for example volume of delivered product, dosing time or dosing speed, driving for example the opening/closing of the outlet nozzles 8, 8a, by the shutters 16 connected to the motor means 6, 6a through the shafts 11, 11a and/or the rotation speed of the shafts 11, 11a themselves.

In particular, the device 10 and the dosing system 20 of the invention exploit the same rotary movement of the motor means 6, 6a, composed for example of stepped motors, both to actuate the shaft 11, 11a of the pumping element 7, 7a, and to perform the linear movements of the shaft useful to select the delivery circuit.

The rotary movement of the motor means 6, 6a, is transformed by the linear actuator 4, 4a, composed for example of a worm screw/scroll system, into a linear movement of the shaft 11, 11a adapted to open/close the shutters 16, 16a of the first and of the second outlet nozzle 8, 8a, thereby regulating the amount of product delivered by the dosing device 10 and by the dosing system 20 through the second outlet duct 9.

Upon reaching the abutment, performed in the second outlet duct 9, by the shaft 11, 11a, its translation stops and the movement transmitted by the motor means 6, 6a to the shaft 11, 11a becomes rotary and actuates the pumping element 7, 7a which starts the delivery of the product.

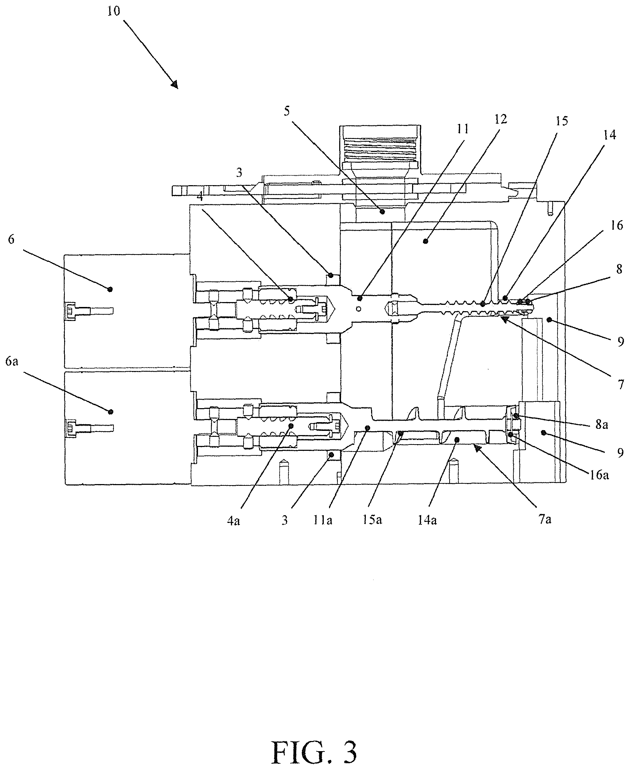

The regulation of the delivered product is further obtained by suitably combining the opening and the closing of the outlet nozzles 8, 8a, as shown in Figures 3, 4, 5, 6.

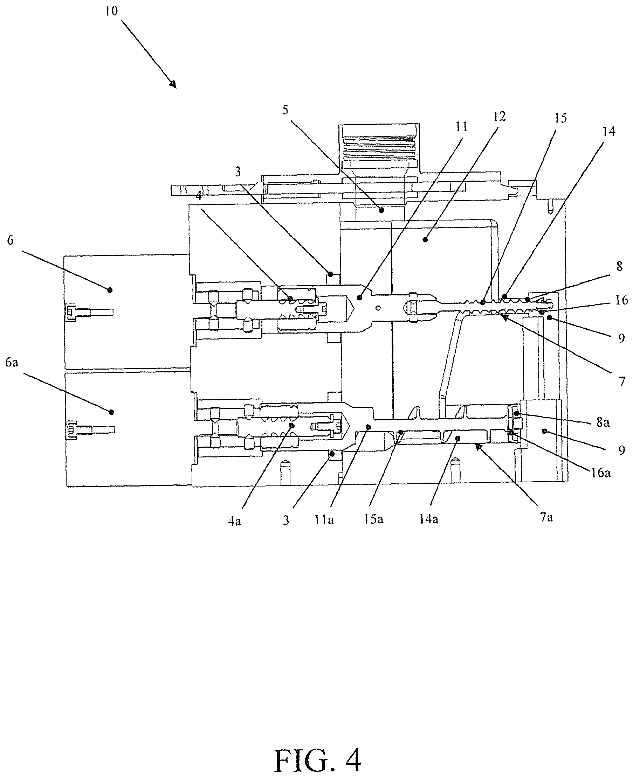

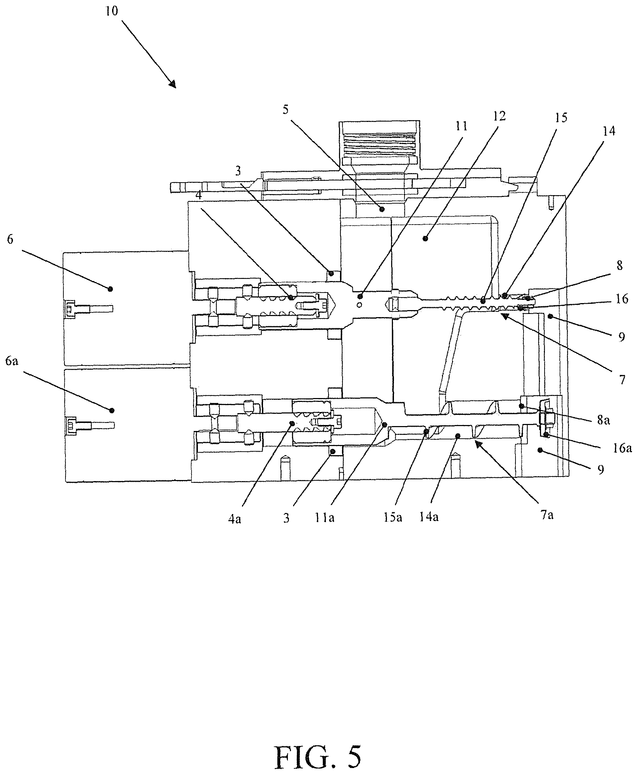

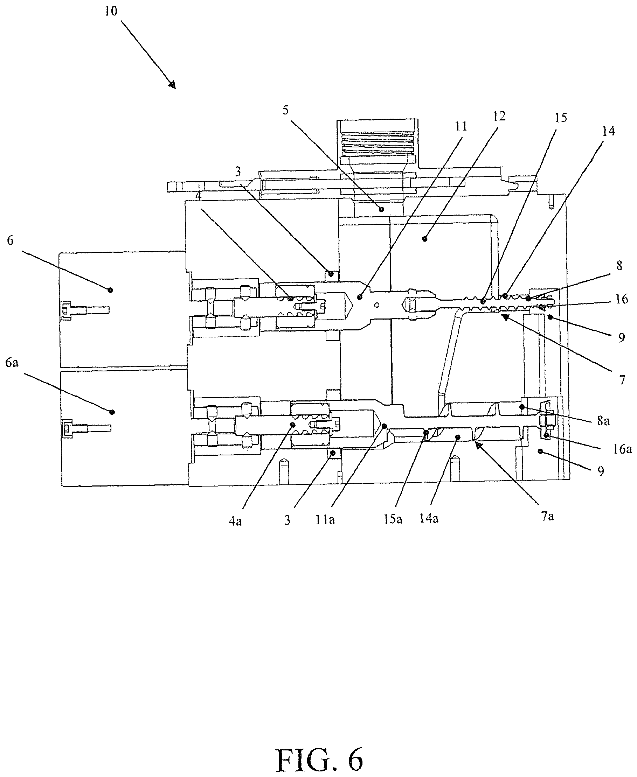

In particular, three adjustment steps can be obtained, by opening only the outlet nozzle 8, 8a with lower flow-rate, as shown in Figure 4, only the outlet nozzle 8 with greater flow-rate, as shown in Figure 5, or by opening both nozzles, as shown in Figure 6, in addition to closing both outlet nozzles 8, 8a, as shown in Figure 3, which blocks the delivery of the product.

Advantageously, the dosing device 10 and system 20 according to the present invention allow managing both the opening and the closing of a duct and, at the same time the flow of the product to be dosed which goes out of the outlet nozzle of the product, through the use of a single actuating element which controls both the pump rotation and the shutter advancement.

## Claims

1. Device (10) for delivering and dosing powdery, liquid, pasty or creamy products comprising:
- a first duct (5) for entering the product to be dosed;
- a second duct (9) for exiting the dosed product;
- a internal recess (12) connected to the first duct (5) for entering the product to be dosed;
- at least one first pumping element (7, 7a) for dosing such product, fluid connected to the internal recess (12) and to the second duct (9) for exiting the dosed product;
- a first shaft (11, 11a) connected to the first pumping element (7, 7a);
- first motor means (6, 6a) connected to the first shaft (11, 11a) through a first linear actuator (4, 4a) adapted to transform the rotary motion of the first motor means (6, 6a) into a linear movement of the first shaft (11, 11a) which is performed until the first shaft (11, 11a) reaches an abutment obtained in the outlet duct (9), the movement of the first shaft (11, 11a) being adapted to follow the rotary motion of the first motor means (6, 6a) after the first shaft (11, 11a) has reached the abutment, to actuate the first pumping element (7) and deliver the product from the second duct (9) ;
and further comprising:
- a second pumping element (7a) fluid connected to the internal recess (12) and to the second duct (9) of the dosed product;
- a second shaft (11a) connected to the second pumping element (7a);
- second motor means (6a) connected to the second shaft (11a) through a second linear actuator (4a) adapted to transform the rotary motion of the second motor means (6a) into a linear movement of the second shaft (11a) which is performed until the second shaft (11a) reaches an abutment obtained in the second duct (9), the movement of the second shaft (11a) being adapted to follow the rotary motion of the second motor means (6a) after the second shaft (11a) has reached the abutment, to actuate the second pumping element (7a) dosing the delivery of the product from the second duct (9);
wherein the second pumping element (7a) has a flow-rate greater than that of the first pumping element (7), in order to allow an adjustment of the flow-rate by activating both or only one of the two pumping elements (7, 7a), the first and second linear actuators (4, 4a) are composed of a worm screw, preferably with a reversible pitch, with related scroll connected through the corresponding shaft (11, 11a) to the corresponding motor means (6, 6a), the first and second pumping elements (7, 7a) are volumetric pumps and comprise a pumping chamber (14, 14a) inside which a rotor (15, 15a) is assembled connected to the corresponding shaft (11, 11a) and to a corresponding shutter (16, 16a) adapted to close a corresponding outlet nozzle (8, 8a) of the product which communicates the internal recess (12) with the second duct (9), and the second pumping element (7a) has a pumping chamber (14a) whose volume is greater than that of the pumping chamber (14) of the first pumping element (7), in order to allow an adjustment of the flow-rate by opening only one of the two outlet nozzles (8, 8a) or by opening them both simultaneously, thereby dosing with more accuracy a delivery of the product from the second duct (9).

2. Device (10) for delivering and dosing powdery, liquid, pasty or creamy products according to claim 1, **characterized in that** the first and second pumping elements (7, 7a) are cochleae or volumetric pumps and the first and second motor means (6, 6a) are composed of an electric motor of the stepped type.

3. System (20) for delivering and dosing powdery, liquid, pasty or creamy products comprising a tank (21) adapted to contain the product to be dosed, and the dosing device (10) according to one of claims 1 to 2 connected to the tank (21) through the first duct (5).

4. Dispensing machine for delivering and dosing powdery, liquid, pasty or creamy products comprising a plurality of devices (10) or systems (20) according to one of claims 1 to 3, and electronic controls for driving the motor means (6, 6a) capable of changing the dosing parameters by activating both or only one of the two pumping elements (7, 7a) of each of the devices or systems.

5. Dispensing machine for delivering and dosing powdery, liquid, pasty or creamy products according to claim 4, **characterized in that** the dosing parameters are changed by driving the opening/closing of the outlet nozzles (8, 8a) by the shutters (16, 16a) connected to the motor means (6, 6a) through the shafts (11, 11a).

## Patentansprüche

1. Vorrichtung (10) zum Ausgeben und Dosieren von pulverförmigen, flüssigen, pastösen oder cremigen Produkten, umfassend:
- eine erste Einlassleitung (5) für das zu dosierende Produkt;
- einen zweiten Auslasskanal (9) für das dosierte Produkt;
- einen inneren Hohlraum (12), der mit der ersten Einlassleitung (5) für das zu dosierende Produkt verbunden ist;
- mindestens ein erstes Pumpelement (7, 7a), das dieses Produkt dosiert, das strömungstechnisch mit dem inneren Hohlraum (12) und dem zweiten Auslasskanal (9) des dosierten Produkts verbunden ist;
- eine erste Welle (11, 11a), die mit dem ersten Pumpelement (7, 7a) verbunden ist;
- erste Motormittel (6, 6a), die mit der ersten Welle (11, 11a) mittels eines ersten linearen Aktuators (4, 4a) verbunden sind, der in der Lage ist, die Drehbewegung der ersten Motormittel ((6, 6a) in a umzuwandeln Linearbewegung der ersten Welle (11, 11a), die betätigt wird, bis die erste Welle (11, 11a) einen in der zweiten Leitung (9) ausgebildeten Anschlag erreicht, wobei die Bewegung der ersten Welle (11, 11a) folgen kann die Drehbewegung der ersten Motormittel (6, 6a), nachdem die erste Welle (11, 11a) den Anschlag erreicht hat, um das erste Pumpelement (7) zu betätigen und das Produkt aus der zweiten Leitung (9) abzugeben;
und auch darunter:
- ein zweites Pumpelement (7a), das strömungstechnisch mit dem inneren Hohlraum (12) und der zweiten Leitung (9) des dosierten Produkts verbunden ist;
- eine zweite Welle (11a), die mit dem zweiten Pumpelement (7a) verbunden ist;
- zweite Motormittel (6a), die mit der zweiten Welle (11a) mittels verbunden sind
- ein zweites Linearstellglied (4a), das geeignet ist, die Drehbewegung der zweiten Motoreinrichtung (6a) in eine lineare Bewegung der zweiten Welle (11a) umzuwandeln, die stattfindet, bis die zweite Welle (11a) einen in der zweiten ausgebildeten Anschlag erreicht Leitung (9), wobei die Bewegung der zweiten Welle (11a) der Drehbewegung der zweiten Motoreinrichtung (6a) folgen kann, nachdem die zweite Welle (11a) den Anschlag erreicht hat, um das zweite Pumpelement (7a) zu betätigen. Dosieren der Ausgabe des Produkts aus der zweiten Leitung (9);
wobei das zweite Pumpelement (7a) eine höhere Flussrate als das erste Pumpelement (7) hat, um eine Flussratenregulierung zu ermöglichen, indem beide oder nur eines der zwei Pumpelemente (7, 7a), das erste, aktiviert werden und das zweite lineare Stellglied (4, 4a) aus einer Schneckenschraube besteht, vorzugsweise mit umkehrbarer Steigung, mit relativer Führungsmutter, die mittels der entsprechenden Welle (11, 11a) mit der entsprechenden Motoreinrichtung (6, 6a) verbunden ist erstes und zweites Pumpelementelement (7, 7a) sind volumetrische Pumpen und umfassen eine Pumpkammer (14, 14a), in der ein Rotor (15, 15a) montiert ist, der mit der entsprechenden Welle (11, 11a) und einem entsprechenden Absperrorgan verbunden ist (16, 16a) zum Verschließen einer entsprechenden Austrittsdüse (8, 8a) des Produkts, die den inneren Hohlraum (12) mit der zweiten Leitung (9) in Verbindung bringt, und das zweite Pumpelement (7a) eine Pumpkammer aufweist (14a) mit einem größeren Volumen als die Pumpkammer (14) des ersten Pumpelements (7), um eine Einstellung der Durchflussmenge zu ermöglichen, indem nur eine der beiden Auslassdüsen (8, 8a) geöffnet wird oder indem beide gleichzeitig geöffnet werden, wodurch die Abgabe des Produkts aus dem reguliert wird zweiter Kanal mit größerer Präzision (9).

2. Vorrichtung (10) zum Ausgeben und Dosieren von pulverförmigen, flüssigen, pastösen oder cremigen Produkten nach Anspruch 1, **dadurch gekennzeichnet, dass** die ersten und zweiten Pumpelemente (7, 7a) Schnecken oder volumetrische Pumpen sind und die ersten und zweiten Motormittel (6, 6a) bestehen aus einem Elektromotor vom Schritttyp.

3. System (20) zum Ausgeben und Dosieren von pulverförmigen, flüssigen, pastösen oder cremigen Produkten, umfassend einen Behälter (21), der geeignet ist, das zu dosierende Produkt aufzunehmen, und die Dosiervorrichtung (10) nach einem der Ansprüche 1 bis 2, die damit verbunden ist dem Tank (21) über die erste Leitung (5).

4. Ausgabemaschine zum Ausgeben und Dosieren von pulverförmigen, flüssigen, pastösen oder cremigen Produkten, umfassend eine Vielzahl von Vorrichtungen (10) oder Systemen (20) nach einem der Ansprüche 1 bis 3 und elektronische Steuerungen zum Steuern der Motormittel (6, 6a), die in der Lage ist, die Dosierparameter zu variieren, indem beide oder nur eines der beiden Pumpelemente (7, 7a) jeder der Vorrichtungen oder Systeme aktiviert werden.

5. Ausgabemaschine zum Ausgeben und Dosieren von pulverförmigen, flüssigen, pastösen oder cremigen Produkten nach Anspruch 4, **dadurch gekennzeichnet, dass** die Dosierparameter verändert werden, indem das Öffnen/Schließen der Auslassdüsen (8, 8a) durch die Absperrorgane (16, 16) gesteuert wird. 16a) verbunden mit den Motormitteln (6, 6a) durch die Wellen (11, 11a).

## Revendications

1. Dispositif (10) de distribution et de dosage de produits pulvérulents, liquides, pâteux ou crémeux comprenant:
- un premier conduit d'entrée (5) pour le produit à doser;
- un second conduit de sortie (9) du produit dosé;
- une cavité interne (12) reliée au premier conduit d'entrée (5) du produit à doser;
- au moins un premier élément de pompage (7, 7a) qui dose ce produit, relié de manière fluidique à la cavité interne (12) et au second conduit de sortie (9) du produit dosé;
- un premier arbre (11, 11a) relié au premier élément de pompage (7, 7a);
- des premiers moyens moteurs (6, 6a) reliés au premier arbre (11, 11a) au moyen d'un premier actionneur linéaire (4, 4a) apte à transformer le mouvement de rotation des premiers moyens moteurs (6, 6a) en un mouvement linéaire du premier arbre (11, 11a) qui est actionné jusqu'à ce que le premier arbre (11, 11a) atteigne une butée formée dans le second conduit (9), le mouvement du premier arbre (11, 11a) pouvant suivre le mouvement de rotation des premiers moyens moteurs (6, 6a) après que le premier arbre (11, 11a) a atteint la butée, pour actionner le premier élément de pompage (7) et distribuer le produit du second conduit (9);
et comprenant également:
- un deuxième élément de pompage (7a) relié de manière fluidique à la cavité interne (12) et au deuxième conduit (9) du produit dosé;
- un second arbre (11a) relié au second élément de pompage (7a);
- des seconds moyens moteurs (6a) reliés au second arbre (11a) au moyen d'un second actionneur linéaire (4a) apte à transformer le mouvement rotatif des seconds moyens moteurs (6a) en un mouvement linéaire du second arbre (11a) qui a lieu jusqu'à ce que le deuxième arbre (11a) atteigne une butée ménagée dans le deuxième conduit (9), le mouvement du deuxième arbre (11a) étant apte à suivre le mouvement de rotation du deuxième moyen moteur (6a) après la le deuxième arbre (11a) a atteint la butée, pour actionner le deuxième élément de pompage (7a) en dosant le refoulement du produit du deuxième conduit (9);
dans lequel le deuxième élément de pompage (7a) a un débit supérieur à celui du premier élément de pompage (7), de manière à permettre une régulation du débit en activant les deux ou un seul des deux éléments de pompage (7, 7a), le premier et le deuxième actionneur linéaire (4, 4a) consiste en une vis sans fin, de préférence à pas réversible, avec un écrou-mère relatif relié au moyen de l'arbre correspondant (11, 11a) aux moyens moteurs correspondants (6, 6a), le premier et le second élément de pompage (7, 7a) sont des pompes volumétriques et comprennent une chambre de pompage (14, 14a) à l'intérieur de laquelle est monté un rotor (15, 15a) relié à l'arbre correspondant (11, 11a) et à un obturateur correspondant (16, 16a) apte à obturer une buse correspondante de sortie (8, 8a) du produit qui met en communication la cavité interne (12) avec le deuxième conduit (9), et le deuxième élément de pompage (7a) comporte une chambre de pompage (14a) de volume supérieur à celui de la chambre de pompage (14) du premier élément de pompage (7), de manière à permettre le réglage du débit en n'ouvrant qu'un seul des deux embouts de sortie (8, 8a) ou en ouvrant les deux en même temps, régulant ainsi le débit du produit de la second conduit avec plus de précision (9).

2. Dispositif (10) de distribution et de dosage de produits pulvérulents, liquides, pâteux ou crémeux selon la revendication 1, **caractérisé en ce que** les premier et deuxième éléments de pompage (7, 7a) sont des vis sans fin ou des pompes volumétriques et les premier et deuxième moyens moteurs (6, 6a) consistent en un moteur électrique du type pas à pas.

3. Système (20) de distribution et de dosage de produits pulvérulents, liquides, pâteux ou crémeux comprenant un réservoir (21) apte à contenir le produit à doser, et le dispositif doseur (10) selon l'une des revendications 1 à 2 relié à le réservoir (21) par le premier conduit (5).

4. Machine de distribution et de dosage de produits pulvérulents, liquides, pâteux ou crémeux comprenant une pluralité de dispositifs (10) ou systèmes (20) selon l'une des revendications 1 à 3, et des commandes électroniques pour commander les moyens moteurs (6, 6a ) apte à faire varier les paramètres de dosage en activant les deux ou un seul des deux éléments de pompage (7, 7a) de chacun des dispositifs ou systèmes.

5. Machine de distribution et de dosage de produits pulvérulents, liquides, pâteux ou crémeux selon la revendication 4, **caractérisée en ce que** l'on fait varier les paramètres de dosage en commandant l'ouverture/fermeture des buses de sortie (8, 8a) par les obturateurs (16, 16a) reliée aux moyens moteurs (6, 6a) par les arbres (11, 1a).
